# FASCICULE DE BREVET EUROPEEN

(11) **EP 2 292 406 B1**
(45) Date de publication et mention de la délivrance du brevet: **27.05.2015**
(21) Numéro de dépôt: 10174852.3
(22) Date de dépôt: 01.09.2010
(51) Int. Cl.: B29C 49/56, B29C 49/06, B29C 49/36, B29C 49/12, B29C 49/68, B29C 33/26

(54) **Machine pour la fabrication de récipients comportant un module de commande de dispositifs d'une unité de moulage en vue d'opérer un changement de moule**
Maschine zur Herstellung von Behältern, die ein Steuermodul der Vorrichtungen einer Formgusseinheit im Hinblick auf einen Wechsel der Gussform umfasst
Machine for the manufacture of containers comprising a module for controlling devices of a moulding unit so as to effect a change of mould

(30) Priorité: 08.09.2009 FR 0956111
(43) Date de publication de la demande: 09.03.2011
(73) Titulaire: SIDEL PARTICIPATIONS, 76930 Octeville-sur-Mer (FR)
(72) Inventeur: Duclos, Yves-Alban, 76930, Octeville sur Mer (FR); Hazard, Stéphane, 76930, Octeville sur Mer (FR); Burel, Fabrice, 76930, Octeville sur Mer (FR)
(74) Mandataire: Gevers France

(56) Documents cités:
- EP-A2- 2 080 606
- FR-A1- 2 646 802
- FR-A1- 2 843 714

## Description

La présente invention concerne une machine pour la fabrication de récipients comportant un module de commande de dispositifs d'une unité de moulage en vue d'opérer un changement de moule.

On connaît de l'état de la technique de telles machines de fabrication de récipients, notamment mais non exclusivement, des machines dites "rotatives".

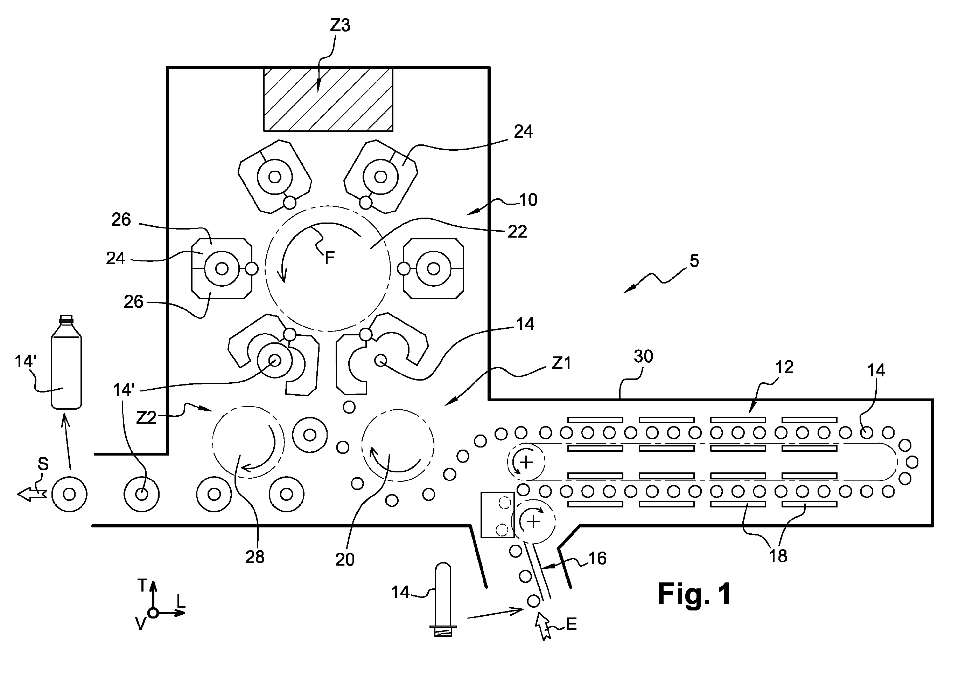

On a représenté sur la figure 1, une installation 5 comportant une machine de fabrication 10 de récipients selon l'état de la technique dans laquelle la machine 10 (encore appelée "souffleuse") est associée à un four de conditionnement thermique 12 des préformes 14.

L'installation 5 comporte un dispositif d'alimentation 16 en préformes 14 (ou ébauches) qui sont introduites dans l'installation par une entrée E qui communique avec une zone d'entrée du four 12.

Le four 12 comporte des moyens de chauffage 18 des préformes 14 qui sont agencés sur tout ou partie d'un parcours en "U" s'étendant de la zone d'entrée du four dans laquelle les préformes 14 sont amenées par le dispositif d'alimentation 16 à une zone de sortie du four 12 au voisinage de laquelle est agencé un premier dispositif de transfert 20.

Le premier dispositif de transfert 20 est destiné à transférer les préformes 14 conditionnées thermiquement depuis la zone de sortie du four 12 jusqu'à une zone Z1, dite d'introduction, des préformes 14 dans la machine 10 de fabrication.

La machine 10 de fabrication comporte un carrousel 22 équipé d'une série d'unités de moulage 24 réparties circonférentiellement et des moyens associés de soufflage ou d'étirage-soufflage (non représentés).

Une unité de moulage 24 comporte généralement deux porte-moules 26 qui sont montés mobiles entre une position ouverte et une position fermée, par exemple montés mobiles en rotation l'un par rapport à l'autre, et un moule comportant au moins deux éléments de moulage fixés chacun de manière démontable à un porte-moule 26 associé.

La machine 10 de fabrication est susceptible de fonctionner selon différents modes de fonctionnement.

Selon un premier mode de fonctionnement de la machine, dit de production, la machine 10 est utilisée conjointement au four 12 de l'installation 5 pour la fabrication de récipients.

Dans un tel mode de fonctionnement de la machine 10, le carrousel 22 est entraîné en rotation de manière que chaque unité de moulage 24 parcourt un cycle de transformation depuis ladite zone d'introduction Z1 jusqu'à une zone Z2, dite d'évacuation, des récipients 14' dans laquelle un deuxième dispositif de transfert 28 est agencé.

Le deuxième dispositif de transfert 28 est destiné à transférer les récipients 14', obtenus à partir des préformes 14, depuis la zone d'évacuation Z2 de la machine 10 jusqu'à une sortie S de l'installation 5.

Comme l'illustre la figure 1, les zones d'introduction des préformes 14 et d'évacuation des récipients 14' sont adjacentes et situées dans la partie avant de la machine 10 de sorte que le cycle de transformation est réalisé sur la quasi-totalité de la circonférence de la machine.

L'installation 5 comporte généralement une enceinte de protection 30 formant un caisson disposé de manière à entourer au moins la machine 10 de fabrication et le four 12.

En mode de production de la machine 10 illustré par la figure 1, la fabrication de récipients en matière plastique, tels que des bouteilles, flacons, etc. est donc effectuée par soufflage ou par étirage-soufflage, dans les unités de moulage 24, de préformes 14 préalablement chauffées dans le four 12 de conditionnement thermique.

Toutefois, si le mode de production constitue le principal mode de fonctionnement de la machine, la machine 10 présente également un autre mode de fonctionnement, dit d'intervention, qui est tout aussi important.

En effet, lesdits au moins deux éléments de moulage formant le moule et comportant alors chacun une demi-empreinte sont fixés aux porte-moules 26 par l'intermédiaire de moyens de fixation (non visibles) aptes à en permettre le démontage pour effectuer un changement du moule.

Le document EP-B1-0.821.641 au nom de la demanderesse décrit notamment différents perfectionnements apportés tant sur la structure d'une unité de moulage et du moule qu'elle comporte que sur les moyens de fixation de moule et on se reportera avantageusement à ce document, uniquement donné à titre d'exemple.

Un tel changement du moule est en particulier requis pour procéder à des fabrications de récipients de formes et/ou de dimensions différentes ou encore à leur remplacement en cas d'endommagement et/ou d'usure des éléments de moulage.

En fonction de l'utilisation de la machine 10, le mode de fonctionnement, dit d'intervention, au cours duquel la production de récipient par la machine est arrêtée, est plus ou moins fréquemment mis en oeuvre.

Dans certains cas, les changements de moule sont très fréquents de sorte qu'une attention encore plus grande est alors portée au temps nécessaire pour procéder au changement du moule d'une unité de moulage.

En effet, la durée requise pour procéder au changement d'un moule est à multiplier par le nombre d'unités de moulage 24 que comporte la machine 10, lequel atteint par exemple un nombre compris entre 16 et 30 unités de moulage.

Les opérations requises au changement du moule d'une unité de moulage sont nombreuses et réalisées manuellement par un opérateur, parfois deux opérateurs, de sorte que la durée d'intervention est très souvent jugée trop longue par les utilisateurs.

Or, l'immobilisation de la machine 10 durant ces opérations présente un coût important du fait de l'arrêt complet de la fabrication qui l'accompagne, les opérations de changement de moule, plus ou moins fréquentes selon les utilisateurs, sont par conséquent coûteuses car longues et complexes.

De surcroît, les opérations de changement de moules sont fatigantes pour l'opérateur et sont mises en oeuvres dans un environnement présentant peu d'ergonomie.

La présente invention a notamment pour but de résoudre les inconvénients précités et vise tout particulièrement à réduire la durée nécessaire au changement du moule d'une unité de moulage tout en améliorant les conditions générales en mode d'intervention de la machine, et cela tant sur le plan de la sécurité que de l'ergonomie.

Dans ce but, l'invention propose une machine pour la fabrication de récipients, notamment de bouteilles, en matière thermoplastique comportant au moins une unité de moulage qui comporte :
- au moins deux porte-moules montés mobiles entre une position ouverte et une position fermée, et
- un moule comportant au moins deux éléments de moulage fixés chacun de manière démontable à un porte-moule associé par des moyens de fixation,
ladite unité de moulage comportant :
- un dispositif d'ouverture/fermeture de l'unité de moulage comportant un organe de commande pour déplacer les porte-moules entre lesdites positions ouverte et fermée ;
- un dispositif de verrouillage de l'unité de moulage comportant un organe de commande des moyens de verrouillage qui sont montés mobiles entre :
   - une position verrouillée dans laquelle les porte-moules de l'unité de moulage sont maintenus en position fermée par lesdits moyens de verrouillage, et
   - une position déverrouillée dans laquelle les porte-moules sont libres d'être écartés de la position fermée vers la position ouverte.

Selon l'invention la machine pour la fabrication de récipients du type décrit précédemment est **caractérisée en ce que** la machine comporte un module de commande susceptible d'occuper au moins :
- un état de veille associé à un mode de fonctionnement de la machine, dit de production, pour la fabrication de récipients par la machine, et
- un état d'utilisation associé à un autre mode de fonctionnement de la machine, dit d'intervention, pour procéder au moins au changement du moule de l'unité de moulage,
   et apte à commander sélectivement le dispositif de verrouillage et le dispositif d'ouverture/fermeture de l'unité de moulage en fonction de l'état occupé par le module,
   ledit module comportant au moins:
- un premier dispositif destiné à actionner sélectivement le dispositif de verrouillage de l'unité de moulage et monté mobile entre :
   - une position de repos occupée lorsque le module est en état de veille, et
   - une position de travail occupée lorsque le module est en état d'utilisation et dans laquelle le premier dispositif est apte à coopérer avec l'organe de commande du dispositif de verrouillage sous l'action de moyens de déplacement relatif entre le module et la machine,
- un deuxième dispositif destiné à actionner sélectivement l'organe de commande du dispositif d'ouverture/fermeture de l'unité de moulage et qui est monté mobile entre :
   - une position de repos occupée lorsque le module est en état de vielle, et
   - une position de travail occupée lorsque le module est en état de service et dans laquelle le deuxième dispositif est apte à coopérer avec l'organe de commande du dispositif d'ouverture/fermeture sous l'action de moyens de déplacement relatif entre le module et la machine,
   et un châssis qui supporte lesdits premier et deuxième dispositifs du module.

Avantageusement, le module de commande selon l'invention permet de supprimer toute intervention manuelle d'un opérateur pour réaliser le déverrouillage et l'ouverture de l'unité de moulage afin de procéder au changement du moule de ladite unité.

Ainsi, ces premières étapes du procédé de changement du moule d'une unité de moulage sont de moindre durée.

Avantageusement, la came du deuxième dispositif est apte à ouvrir les porte-moules de l'unité de moulage au maximum afin de faciliter l'accès aux éléments de moulage comme à leur moyens de fixation grâce à quoi l'ergonomie des opérations suivantes de démontage et de montage se trouve améliorée.

Selon d'autres caractéristiques de l'invention :
- les moyens de déplacement relatif sont constitués par l'unité de moulage qui est apte à être déplacée par rapport au module fixe suivant une course propre à amener chaque organe de commande à coopérer avec le dispositif associé occupant sa position de travail et ceci jusqu'à atteindre une position déterminée, dite de changement de moule ;
- le premier dispositif du module comporte au moins un actionneur commandant sélectivement le déplacement d'au moins une came entre lesdites positions de repos et de travail, ladite came coopérant avec l'organe de commande du dispositif de verrouillage pour provoquer le déplacement des moyens de verrouillage entre lesdites positions verrouillée et déverrouillée ;
- la came du premier dispositif du module est montée mobile en rotation ou en translation entre lesdites positions de repos et de travail ;
- la came de commande du dispositif de verrouillage comporte un profil de came présentant au moins un tronçon de déverrouillage pour provoquer le déplacement des moyens de verrouillage vers la position déverrouillée ;
- le dispositif de verrouillage comporte des moyens de rappel élastique aptes à rappeler automatiquement les moyens de verrouillage vers la position verrouillée ;
- l'unité de moulage comporte un mécanisme de blocage associé au dispositif de verrouillage, ledit mécanisme comportant des moyens de blocage aptes à être commandés sélectivement entre une position inactive et une position active de blocage dans laquelle lesdits moyens de blocage immobilisent les moyens de verrouillage en position déverrouillée ;
- le mécanisme de blocage comporte un organe de rappel élastique des moyens de blocage vers la position active et les moyens de blocage sont déplacés, à l'encontre dudit organe de rappel élastique, de la position active vers la position inactive par un élément de commande qui, lié à l'un des porte-moules, est apte à coopérer avec les moyens de blocage de manière à provoquer automatiquement le déblocage lors de la fermeture des porte-moules de l'unité de moulage ;
   - le deuxième dispositif du module comporte au moins un actionneur commandant sélectivement le déplacement d'au moins une came entre lesdites positions de repos et de travail, ladite came coopérant avec l'organe de commande du dispositif d'ouverture/fermeture de l'unité pour provoquer le déplacement des porte-moules entre lesdites positions ouverte et fermée ;
   - la came du deuxième dispositif est montée mobile en translation ou en rotation entre lesdites positions de repos et de travail ;
   - la came de commande du dispositif d'ouverture et de fermeture comporte un profil de came présentant au moins un tronçon de commande de l'ouverture et un tronçon de commande de la fermeture des porte-moules de l'unité ;
   - les actionneurs du premier dispositif et du deuxième dispositif constituent des moyens de commande du changement d'état du module entre les états de veille et d'utilisation ;
   - la machine de type rotative comporte un carrousel pourvu circonférentiellement d'une série d'unités de moulage réparties angulairement de manière régulière, chacune des unités parcourant un trajet globalement circulaire depuis une zone d'introduction des préformes jusqu'à une zone d'évacuation des récipients respectivement situées dans une partie avant de la machine et le module est agencé dans une partie arrière de la machine qui est diamétralement opposée à ladite partie avant.

D'autres caractéristiques et avantages de la présente invention apparaîtront à la lecture de la description détaillée qui va suivre pour la compréhension de laquelle on se reportera aux dessins dans lesquels :
- la figure 1 est une vue de dessus qui représente schématiquement une installation comportant un exemple de réalisation d'une machine pour la fabrication de récipients selon l'état de la technique ;
- les figures 2 et 3 sont des vues en perspective qui représentent une unité de moulage susceptible d'équiper l'un des postes d'une machine selon la figure 1, ladite unité étant respectivement illustrée de trois quart avant en position fermée et de côté en position ouverte ;

- les figures 4 et 5 sont des vues en perspective qui représentent respectivement un mode de réalisation préféré du module de commande selon l'invention et qui illustrent le premier dispositif et le deuxième dispositif d'actionnement du module respectivement en position de repos et en position de travail ;
- la figure 6 est une vue de face qui représente en détail la première came du premier dispositif d'actionnement du dispositif de déverrouillage de l'unité de moulage ;
- les figures 7 et 8 sont des vues en coupe qui représentent un exemple de réalisation d'un dispositif de verrouillage d'une unité de moulage et qui illustrent respectivement le mécanisme de blocage associé audit dispositif de verrouillage en position active et inactive ;
- la figure 9 est une vue de dessus qui représente en détail la deuxième came du deuxième dispositif d'actionnement du dispositif de déverrouillage de l'unité de moulage ;
- la figure 10 est un graphe dont la courbe représente les différentes étapes d'un procédé de commande de la machine dont le carrousel, portant les unités de moulage et entraîné en rotation, constitue avantageusement les moyens de déplacement relatif.

Dans la suite de la description, on adoptera à titre non limitatif les orientations longitudinale, verticale et transversale en référence au trièdre (L, V, T) représentés sur les figures.

Par convention, les directions longitudinale et transversale sont déterminées de manière fixe par rapport aux porte-moules de sorte que la position ouverte ou fermée occupée est sans incidence sur lesdites orientations.

On utilisera également à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale.

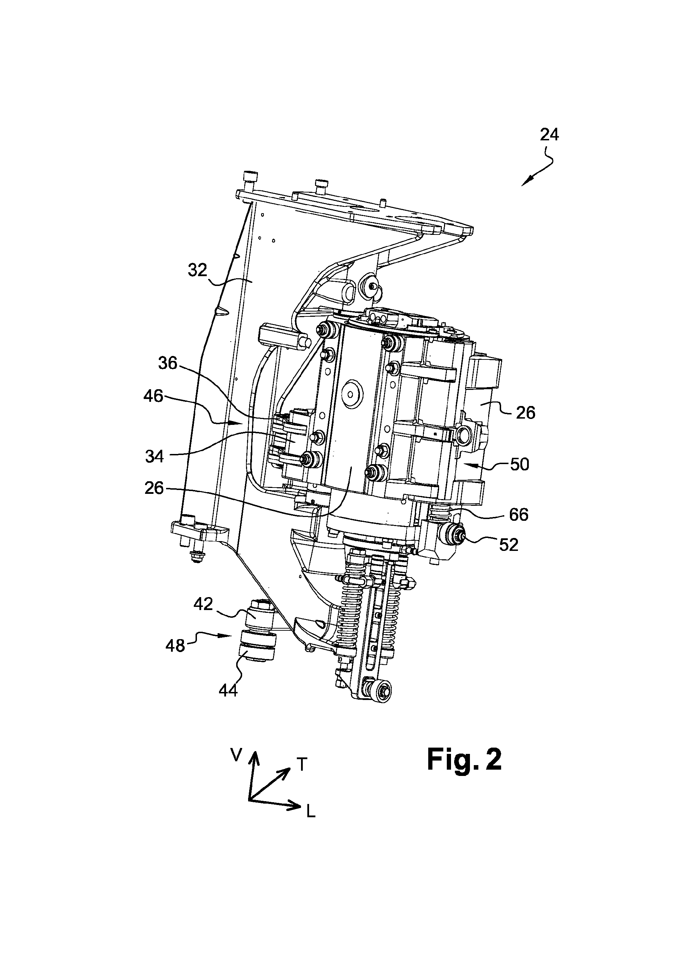

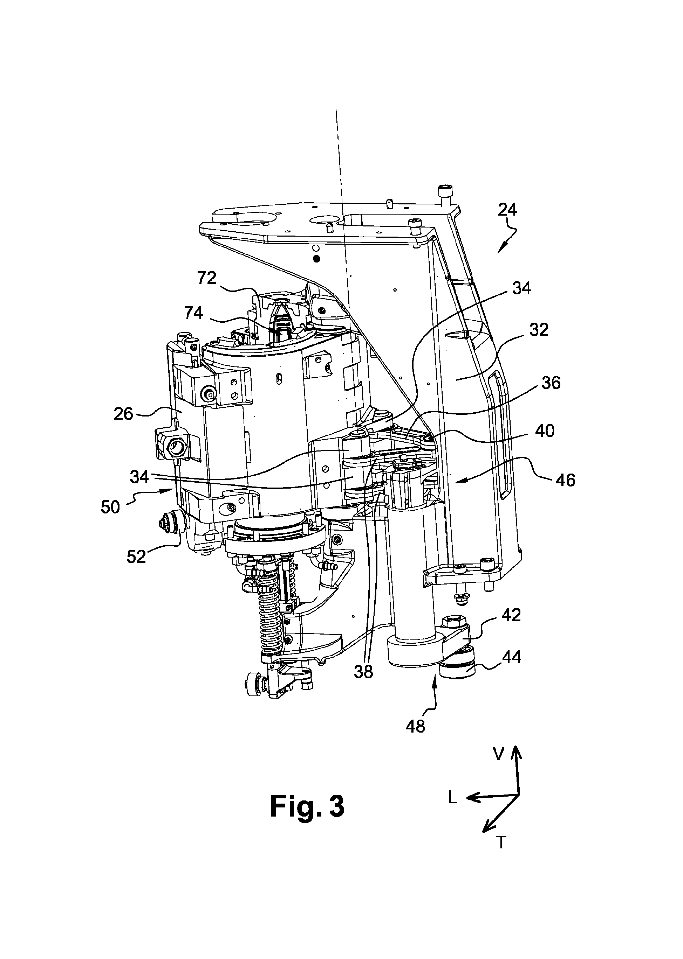

On a représenté aux figures 2 et 3, un exemple de réalisation d'une unité de moulage 24 susceptible d'être montée sur un carrousel 22 d'une machine 10 de fabrication de récipients du type de celle représentée à la figure 1 et décrite en préambule en relation avec les mode de fonctionnement de la machine 10.

Une telle unité de moulage 24 constitue alors l'un des postes de moulage par soufflage ou par étirage-soufflage de la machine 10 qui comporte une série de "n" unités de moulage 24, réparties angulairement de manière régulière autour du carrousel 22 de la machine 10.

S'agissant des moyens de soufflage ou d'étirage-soufflage précités, encore parfois appelés et réalisés sous la forme d'une tuyère de soufflage, on se reportera par exemple au document FR-2.764.544 pour de plus amples détails.

L'unité de moulage 24 comporte deux porte-moules 26 qui sont montés mobiles l'un par rapport à l'autre entre une position ouverte (figure 3) et une position fermée (figure 2) et qui est supportée par une console 32 destinée à être rapportée à fixation sur le bâti de la machine 10.

Plus précisément, les porte-moules 26 sont constitués sous la forme de deux structures porteuses montées pivotantes autour d'un axe O de rotation, l'axe O de rotation s'étendant ici verticalement selon le trièdre (L, V, T).

En variante, seulement l'un des porte-moules 26 est monté mobile tandis que l'autre porte-moule 26 est fixe, le porte-moule 26 mobile étant commandé en déplacement entre lesdites positions ouverte ou fermée.

Chaque porte-moule 26 comporte des moyens d'articulation agencés en arrière selon la direction longitudinale.

De préférence, les moyens d'articulation des porte-moules 26 comportent des oreilles 34 extérieures qui, écartées de l'axe O de rotation, équipent respectivement chaque porte-moule 26.

Sur les oreilles 34 de chaque porte-moule 26 sont montées pivotantes l'une des extrémités de biellettes, respectivement d'au moins une biellette 36 pour le porte-moule 26 de gauche et d'au moins une biellette 38 pour le porte-moule 26 de droite.

L'autre extrémité de chacune des biellettes 36, 38 est raccordée à libre pivotement sur un axe 40 commun d'articulation qui est agencé longitudinalement en arrière de l'unité de moulage 24.

Selon que l'axe 40 commun d'articulation est déplacé approximativement linéairement dans un sens, ici longitudinal, le rapprochant de l'axe O de rotation ou au contraire l'en éloignant, on provoque le rapprochement l'un de l'autre des porte-moules 26 et donc la fermeture de l'unité de moulage 24, ou au contraire l'éloignement des porte-moules 26 l'un de l'autre et donc l'ouverture.

Les porte-moules 26 sont ainsi susceptibles de s'écarter mutuellement l'un de l'autre en pivotant autour de l'axe O de rotation respectivement entre au moins une position fermée (figure 2) et une position ouverte (figure 3).

En raison de la cinématique des porte-moules 26, une unité de moulage 24 de ce type est encore appelée moule "portefeuille" (*ou "book-like opening" en anglais*).

Pour commander ce mouvement de l'axe 40 commun d'articulation, on utilise des moyens d'entraînement à came et à galet. De préférence, les moyens d'entraînement à came et à galet comportent des moyens à levier interposés entre la came et le galet pour former un amplificateur de course.

Selon l'exemple de réalisation, l'axe 40 commun d'articulation est solidaire de l'extrémité d'un bras 42 de commande formant un levier et dont l'autre extrémité libre supporte des moyens suiveurs qui, formés par au moins galet 44, sont propres à coopérer avec des moyens de guidage tels qu'une came.

Les moyens d'articulation et les moyens d'entraînement associés constituent un dispositif d'ouverture/fermeture 46 de l'unité de moulage 24 comportant un organe de commande 48 formé par le bras 42 et le galet 44 qui est apte commander en déplacement les porte-moules 26 entre les positions ouverte et fermée.

A titre d'exemple de réalisation, on se reportera par exemple au document FR-A1-2.843.714 qui concerne notamment des moyens de commande de ce type pour commander en ouverture/fermeture une unité de moulage similaire.

L'unité de moulage 24 comporte un dispositif de verrouillage 50 de l'unité comportant un organe de commande 52 des moyens de verrouillage 54 des porte-moules 26.

Le dispositif de verrouillage 50 est agencé longitudinalement en partie avant, soit à l'opposé de l'axe O de rotation et des moyens du dispositif d'ouverture/fermeture 46 de l'unité de moulage 24, et est destiné à assurer le verrouillage des deux porte-moules 26 en position fermée.

Le dispositif de verrouillage 50 comporte par exemple deux demi-verrous respectivement de type mâle et de type femelle qui sont associés aux porte-moules 26 et aptes à coopérer mutuellement pour maintenir l'unité de moulage 24 en position fermée en verrouillant la fermeture.

Ainsi, le dispositif de verrouillage 50 a notamment pour fonction de prévenir, en mode de production, toute ouverture inopinée lors des opérations de transformation par soufflage ou par étirage-soufflage. A titre indicatif, on rappellera que les pressions finales de soufflage peuvent atteindre 40 bars.

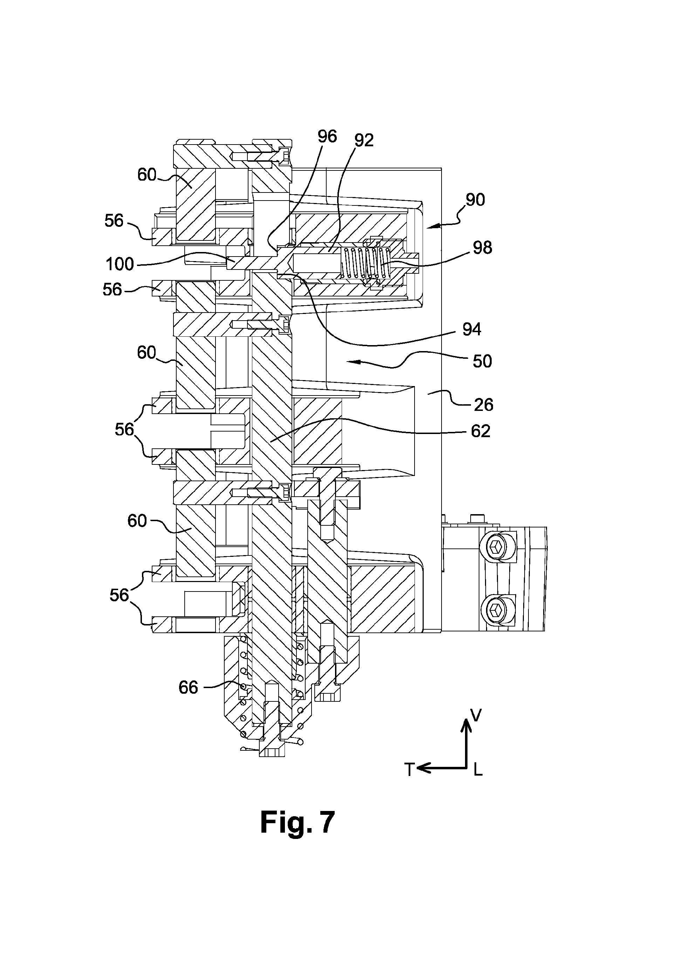

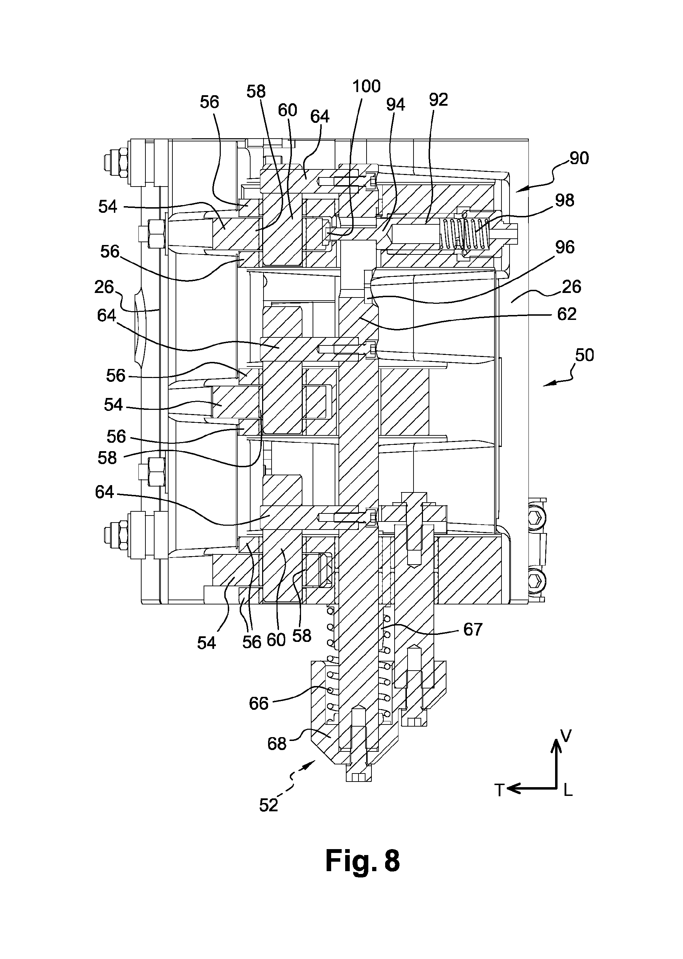

Le dispositif de verrouillage 50 est plus particulièrement représenté en détails sur les coupes des figures 7 et 8.

Les demi-verrous comportent chacun au moins une branche saillante, de préférence ici des branches simples 54 pour le demi-verrou du porte-moule 26 de gauche et des branches doubles 56 pour le demi-verrou du porte-moule 26 de droite.

Les branches 54, 56 respectives des demi-verrous sont dirigées transversalement en direction l'une de l'autre et sont mutuellement décalées verticalement de sorte que, en position fermée telle qu'illustrée par la figure 8, les branches s'interpénètrent entre elles.

Ainsi, chaque branche 54 est reçue entre les deux branches 56 qui se positionnent verticalement au dessus et en dessous.

De préférence, chaque branche 54 du demi-verrou de type femelle comporte une ouverture 58 qui, s'étendant suivant un axe vertical, traverse ladite branche 54 et chaque branche 56 du demi-verrou de type mâle supporte à coulissement selon la direction verticale un doigt de verrouillage 60.

Le dispositif de verrouillage 50 comporte des moyens d'entraînement 62 qui sont liés en déplacement, ici en coulissement, aux doigts de verrouillage 60 formant les moyens de verrouillage montés mobiles entre une position verrouillée et une position déverrouillée.

Avantageusement, chaque doigt de verrouillage 60 est solidaire d'un bras de liaison 64 qui est lui-même solidaire en déplacement des moyens d'entraînement 62.

Le coulissement des moyens d'entraînement 62 entre la position verrouillée (position basse) et la position déverrouillée (position haute) est commandé par l'organe de commande 52 formé de préférence par un galet solidaire des moyens d'entraînement 62, tels qu'un arbre.

Ainsi, le dispositif de verrouillage 50 de l'unité de moulage 24 comporte un organe de commande 52 des moyens de verrouillage 58, 60 qui sont montés mobiles entre :
- une position verrouillée dans laquelle les porte-moules 26 de l'unité de moulage 24 sont maintenus en position fermée par lesdits moyens de verrouillage 58, 60, et
- une position déverrouillée dans laquelle les porte-moules 26 sont libres d'être écartés de la position fermée vers la position ouverte.

L'organe de commande 52 constitué par le galet est destiné à coopérer avec des moyens à came complémentaires pour commander le dispositif de verrouillage 50 entre lesdites positions verrouillée et déverrouillée.

Avantageusement, le dispositif de verrouillage 50 comporte des moyens 66 de rappel élastique qui sont aptes à rappeler automatiquement les moyens de verrouillage 58, 60 vers la position verrouillée.

De préférence, les moyens 66 sont formés par un ressort de rappel élastique qui est traversé centralement par l'arbre formant les moyens d'entraînement 62 et qui prend appui à l'une de ses extrémités sur une coupelle 67 et à l'autre extrémité sur un support 68 fixé aux moyens d'entraînement 62 et portant l'organe de commande 52.

Pour de plus amples détails sur la structure et le fonctionnement d'un tel dispositif de verrouillage 50, on pourra par exemple se reporter au document FR-2.646.802 qui décrit un verrou de conception globalement similaire, et qui représente le préambule de la revendication 1.

Selon l'invention, la machine 10 pour la fabrication de récipients comporte un module de commande.

Avantageusement, le module 70 de commande selon l'invention est susceptible d'occuper au moins :
- un état de veille associé au mode de fonctionnement de la machine 10, dit de production, pour la fabrication de récipients par la machine, et
- un état d'utilisation associé à un autre mode de fonctionnement de la machine 10, dit d'intervention, pour procéder au moins au changement du moule de l'unité de moulage 24.

En effet comme on peut représenté sur la figure 3 illustrant l'unité de moulage 24 en position ouverte, l'unité de moulage 24 comporte un moule 72 comportant au moins deux éléments de moulage munis chacun d'une demi-empreinte 74 (visible sur le demi-moule présent et en position de fixation sur le porte-moule 26).

Toutefois, lorsque le récipient à fabriquer présente un fond de forme complexe, en particulier pétaloïde, il est connu que des problèmes de démoulage sont alors susceptibles de survenir.

C'est la raison pour laquelle, on prévoit avantageusement un fond de moule séparé. Ainsi, le moule 72 comporte respectivement trois éléments distincts, à savoir deux éléments de moulage et un fond de moule (non visible) comportant une empreinte du fond du récipient qui est complémentaire des demi-empreintes 74 que comportent les deux éléments de moulage.

En variante, le moule 72 peut ne pas comporter un tel fond de moule et il est alors réalisé uniquement en deux éléments de moulage conventionnellement appelés alors demi-moules.

De plus, indépendamment du point de savoir si le moule 72 est réalisé en deux ou trois éléments avec un fond de moule, la conception des deux éléments de moulage peut également différer, notamment si - outre le fait de porter une partie de l'empreinte - l'élément de moulage intègre également d'autres fonctions comme le refroidissement.

De préférence, les éléments de moulage du moule 72 sont d'une conception identique à celle qui est décrite dans le document EP-B1-0.821.641 précité.

Dans ce document, chacun des deux éléments de moulage est réalisé en deux pièces distinctes, respectivement et selon les termes utilisés dans ce document : une coquille comportant une partie de l'empreinte et un porte-coquille qui, destiné à être monté sur un porte-moule, comporte un logement dans lequel est reçu et fixé la coquille grâce à des moyens de fixation.

Avantageusement, le module 70 de commande est apte à commander sélectivement le dispositif de verrouillage 50 et le dispositif d'ouverture/fermeture 46 de l'unité de moulage 24 en fonction de l'état occupé par le module 70 de commande.

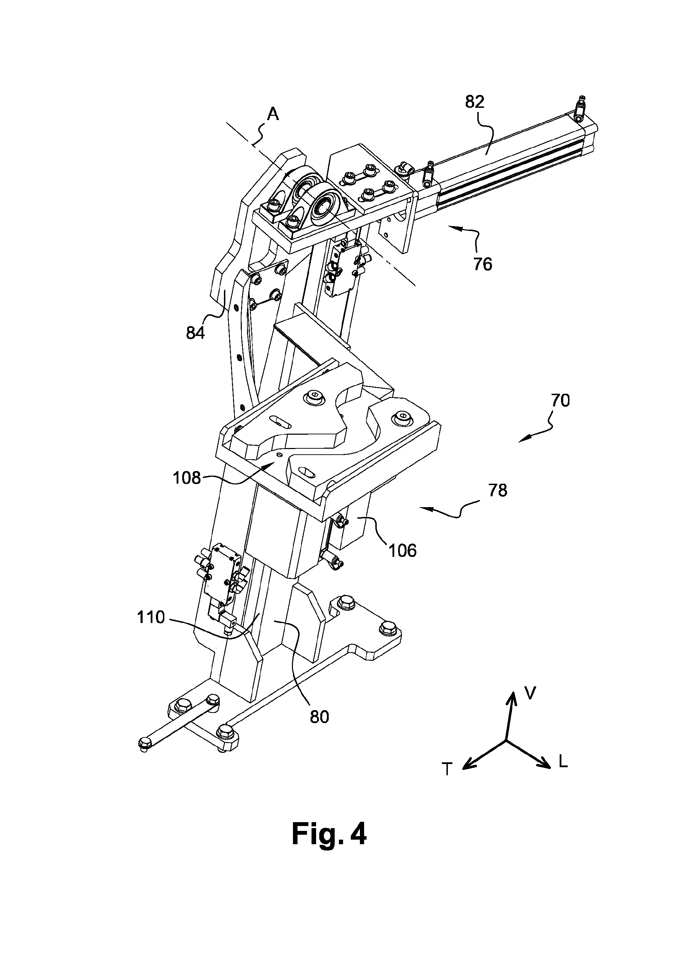

On décrira maintenant un mode de réalisation d'un tel module 70 de commande du dispositif de verrouillage 50 et du dispositif d'ouverture/fermeture 46 de l'unité de moulage 24 qui est plus particulièrement représenté aux figures 4 à 6.

Avantageusement, le module 70 comporte un premier dispositif 76 qui est destiné à actionner sélectivement le dispositif de verrouillage 50 de l'unité de moulage 24.

Avantageusement, le module 70 comporte un deuxième dispositif 78 destiné à actionner sélectivement l'organe de commande 52 du dispositif d'ouverture/fermeture 46 de l'unité de moulage 24.

De préférence, le module 70 comporte un châssis 80 qui supporte respectivement le premier dispositif 76 et le deuxième dispositif 78.

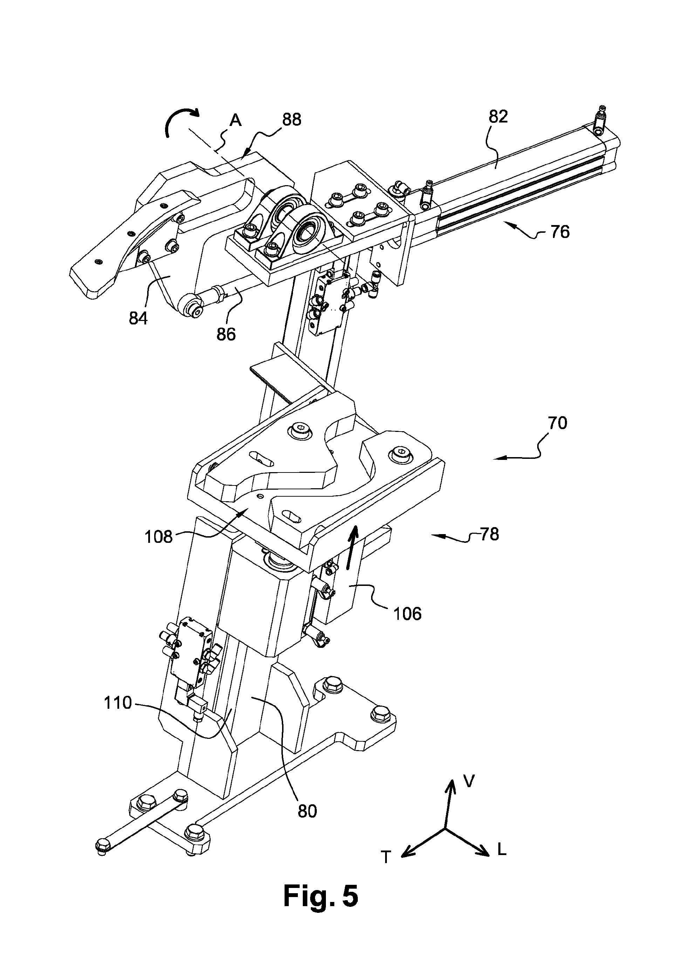

Le premier dispositif 76 du module 70 est monté mobile entre:
- une position de repos (figure 4) occupée lorsque le module 70 est en état de veille, et
- une position de travail (figure 5) occupée lorsque le module 70 est en état d'utilisation.

En position de travail illustrée par la figure 5, le premier dispositif 76 est apte à coopérer avec l'organe de commande 52 du dispositif de verrouillage 50 sous l'action de moyens de déplacement relatif entre le module 70 et la machine 10.

De préférence, le premier dispositif 76 du module 70 comporte au moins un actionneur 82 commandant sélectivement le déplacement d'au moins une came 84 entre lesdites positions de repos et de travail.

La came 84 est, en position de travail, destinée à coopérer avec l'organe de commande 52 du dispositif de verrouillage 50 pour provoquer le déplacement des moyens de verrouillage 58, 60 entre lesdites positions verrouillée et déverrouillée.

De préférence, l'actionneur 82 du premier dispositif 76 est un vérin, tel qu'un vérin hydraulique ou pneumatique, qui est solidaire du châssis 80.

L'actionneur 82 comporte une tige d'actionnement 86 dont l'extrémité libre est liée à la came 84, la tige coulissant globalement selon la direction transversale entre une position rétractée et une position déployée.

De préférence, la came 84 est montée mobile en rotation entre lesdites positions de repos et de travail.

En variante, la came 84 est montée mobile en translation entre lesdites positions de repos et de travail.

La came 84 comporte une partie d'articulation qui est montée à rotation autour d'un axe A de rotation, ici d'orientation longitudinale.

La came 84 comporte une autre partie d'actionnement à laquelle est reliée la tige d'actionnement 86 de l'actionneur 82.

Ainsi qu'il ressort notamment de la comparaison des figures 4 et 5, le pivotement de la came 84 autour de l'axe A depuis sa position de repos jusqu'à sa position de travail (indiqué par une flèche sur la figure 5) est obtenu en commandant l'actionneur 82 dont le coulissement de la tige d'actionnement 86 entre le position rétractée et la position déployée provoque ledit pivotement de la came 84.

La came 84 de commande du dispositif de verrouillage 50 comporte un profil de came 88 destiné à coopérer avec le galet formant l'organe de commande 52.

Avantageusement, les moyens de déplacement relatif sont constitués par l'unité de moulage 24 qui est apte à être déplacée par rapport au module 70 fixe suivant une course propre à amener l'organe de commande 52 à coopérer avec le premier dispositif 76 associé occupant sa position de travail et ceci jusqu'à atteindre une position déterminée, dite de changement de moule.

Plus précisément, lorsque l'unité de moulage 24 équipe une machine 10 de type rotative, telle que celle représentée à la figure 1, le déplacement relatif par rapport au module 70 fixe est obtenu en entraînant le carrousel 22 selon la flèche F.

Grâce à un tel déplacement, l'organe de commande 52 du dispositif de verrouillage 50 formé par le galet va parcourir successivement les tronçons du profil de came 88.

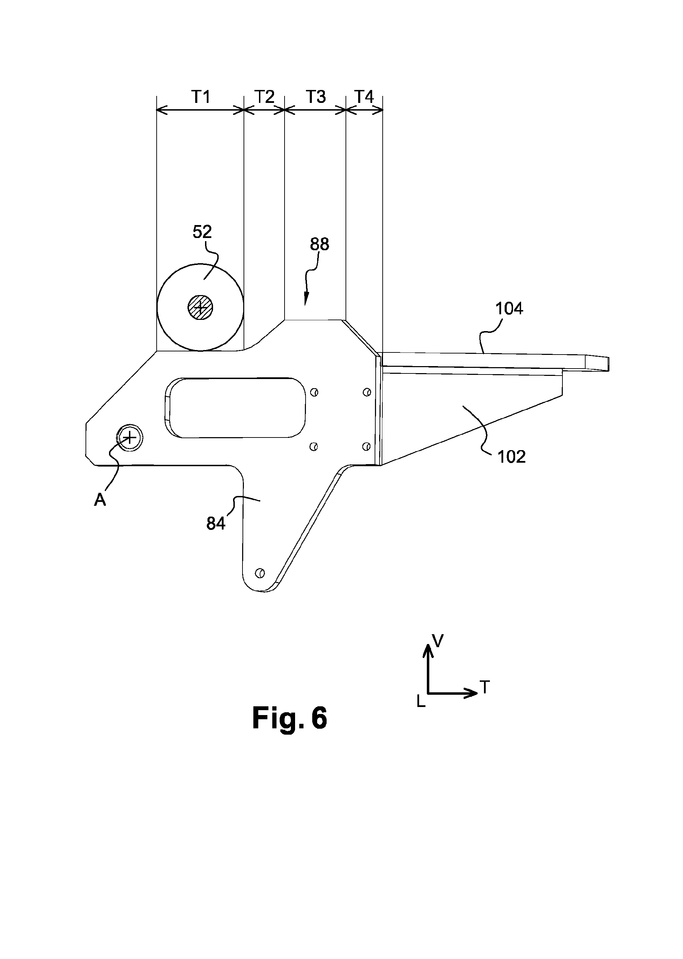

Tel que représenté sur la figure 6, le profil de came 88 de la came 84 comporte successivement au moins deux tronçons, de préférence ici un premier tronçon T1, un deuxième tronçon T2 et un troisième tronçon T3.

Lorsque l'organe de commande 52 parcourt le premier tronçon T1 rectiligne, le dispositif de verrouillage 50 occupant sa position verrouillée est maintenue dans une telle position de sorte que le premier tronçon T1 n'agit pas sur les moyens d'entraînement 62 des moyens de verrouillage 58, 60.

Le premier tronçon T1 permet avantageusement de positionner l'organe de commande 52 avant d'attaquer le deuxième tronçon T2, en variante la came 84 ne comporte pas un tel premier tronçon T1

Lorsque l'organe de commande 52 parcourt le deuxième tronçon T2 formant une rampe inclinée avec une pente constituant une montée suivant le sens de déplacement de l'organe de commande 52, l'organe de commande 52 va alors être déplacé verticalement vers le haut, ce qui provoque simultanément le coulissement vers haut des moyens d'entraînement 62, coulissement qui s'accompagne d'un même déplacement des moyens de verrouillage 58, 60 qui en sont solidaires et qui ce faisant passent de la position verrouillée à la position déverrouillée.

Avantageusement, le deuxième tronçon T2 correspond à un tronçon de déverrouillage qui est apte à agir sur l'organe de commande 52 pour provoquer le déplacement des moyens de verrouillage 50 de la position verrouillée vers la position déverrouillée.

Lorsque l'organe de commande 52 poursuit le profil de came 88, il parcourt ensuite un troisième tronçon T3 rectiligne au cours duquel l'effort de déverrouillage appliqué par la came 84 sur l'organe de commande 52 étant maintenu, le dispositif de verrouillage 50 reste en position déverrouillée et cela malgré l'effort de sens opposé exercé sur l'organe de commande 52 par les moyens 66 de rappel élastique.

Pour maintenir, le dispositif de verrouillage 50 en position déverrouillée, une solution consiste à prolonger le troisième tronçon T3 de manière rectiligne et ceci au moins jusqu'à ce que la position déterminée, dite de changement de moule, soit atteinte.

Toutefois, le dispositif de verrouillage 50 peut également être maintenu en position déverrouillée suivant une autre solution préféré et décrite ci-après.

En effet, on constatera que le profil de came 88 de la came 84 comporte ici un quatrième tronçon T4.

Or, le quatrième tronçon T4 forme une rampe inclinée constituant une descente pour l'organe de commande 52 poursuivant son parcours tant que le carrousel 22 de la machine n'est pas arrêté et la position déterminée de changement de moule atteinte.

Ainsi, lorsque l'organe de commande 52 va parcourir un tel tronçon T4, c'est à dire redescendre suivant la direction verticale, on constate qu'il effectue un dénivelé sensiblement identique à celui franchi lors du passage du deuxième tronçon T2 au troisième tronçon T3.

Par conséquent, les moyens 66 de rappel élastique vont automatiquement provoquer le coulissement vers le bas des moyens d'entraînement 62 liés aux moyens de verrouillage 58, 60 et ramener le dispositif de verrouillage 50 en position verrouillée.

C'est la raison pour laquelle, l'unité de moulage 24 comporte avantageusement un mécanisme 90 de blocage qui est associé au dispositif de verrouillage 50.

Un tel mécanisme 90 de blocage est plus particulièrement visible sur les figures 7 et 8.

Avantageusement, le mécanisme 90 comporte des moyens de blocage 92, tels qu'un coulisseau, qui sont aptes à être commandés sélectivement entre une position inactive (figure 7) et une position active de blocage (figure 8).

La position active de blocage correspond à la position dans laquelle lesdits moyens de blocage 92 immobilisent les moyens de verrouillage 58, 60 en position déverrouillée.

De préférence, les moyens de blocage 92 comportent une partie de blocage mâle formée par un ergot 94 qui est apte à pénétrer dans une partie femelle complémentaire des moyens d'entraînement 62 et qui est ici formée par un cran 96.

Grâce à la coopération de formes entre l'ergot 94 des moyens de blocage 92 et le cran 96 des moyens d'entraînement 62, les moyens d'entraînement 62 sont immobilisés et ne sont alors plus susceptibles de coulisser vers la position verrouillée, en présence ou en l'absence d'application d'un effort de déverrouillage sur l'organe de commande 52.

En l'absence du blocage par le mécanisme 90, un tel retour en position verrouillée serait automatiquement provoqué par les moyens 66 de rappel élastique.

Les moyens de blocage 92 sont ici montés mobiles en translation selon la direction transversale, c'est à dire orthogonalement à la direction verticale selon laquelle s'étendent les moyens d'entraînement 62 des moyens de verrouillage 58, 60, entre lesdites position inactive et active de blocage.

Avantageusement, le mécanisme 90 de blocage comporte un organe 98 de rappel élastique des moyens de blocage 92 vers la position active de blocage.

Avantageusement, les moyens de blocage 92 sont déplacés, à l'encontre dudit organe 98 de rappel élastique, de la position active vers la position inactive par un élément de commande.

De préférence, l'élément de commande est formé par une des branches 54 qui est apte à coopérer avec un doigt 100 solidaire des moyens de blocage 92 de manière à provoquer automatiquement le déblocage du mécanisme 90 lors de la fermeture des porte-moules 26 de l'unité de moulage 24.

Le doigt 100 s'étend en saillie transversalement au delà de la partie mâle formée par l'ergot 94 et jusqu'au logement délimité par les branches 56 dans lequel la branche 54 est destinée à être reçue en position fermée, l'extrémité de ladite branche 54 coopérant alors avec l'extrémité dudit doigt 100 de manière à provoquer le coulissement transversal des moyens de blocage 92 de la position active de blocage vers la position inactive et ceci à l'encontre de l'organe 98 de rappel élastique.

Par conséquent, dès le début de l'ouverture des porte-moules 26, lorsque la branche 54 se désengage d'entre les branches 56 et ne sollicite plus le doigt 100, les moyens de blocage 92 sont automatiquement rappelés vers la position active de blocage dans laquelle l'ergot 94 inséré dans le cran 96 assure l'immobilisation des moyens de verrouillage 58, 60 en position déverrouillée.

Ainsi qu'on l'aura compris il y a avantageusement une synchronisation qui est opérée en considérant le déplacement relatif entre la machine 10 portant l'unité de moulage 24 et le premier dispositif 76 du module 70, la commande de l'ouverture de l'unité de moulage 24 par le deuxième dispositif 78 et le profil de came 88.

Avantageusement, la position relative de la came 84 par rapport à la machine et au deuxième dispositif 78 est étudiée et le profil de came 88 est conformé de manière que, lorsque l'organe de commande 52 quitte le troisième tronçon T3 pour le quatrième tronçon T4, le blocage par le mécanisme 90 des moyens de verrouillage 58, 60 en position déverrouillée soit intervenu.

Une attention particulière étant également portée à la sécurité des opérateurs, il y a lieu de constater que les moyens de blocage 92 sont susceptibles de se désengager, par exemple en cas de rupture de l'organe 98 de rappel élastique ou en cas d'actionnement inopiné par l'opérateur du doigt 100.

Dans ce dernier cas, si un opérateur exerce involontairement un effort suffisant sur le doigt 100, l'ergot 94 peut se désengager du cran 96, les moyens d'entraînement 62 et les moyens de verrouillage 58, 60 qui en sont solidaires seraient alors immédiatement rappelés vers la position verrouillée par les moyens 66 de rappel élastique.

Or, un tel coulissement brusque de ces moyens du dispositif de verrouillage 50 présente un danger certain pour un opérateur en cours d'intervention sur l'unité de moulage 24 et serait susceptible de provoquer des blessures graves.

Avantageusement, le premier dispositif 76 comporte une équerre 102 qui est solidaire en déplacement de la came 84 sur laquelle elle est rapportée à fixation, par exemple par vissage.

L'équerre 102 comporte une partie horizontale présentant une face 104 plane de butée qui s'étend à la suite du quatrième tronçon T4 de manière que, en cas de déblocage inopiné, le support 68 de l'organe de commande 52 du dispositif de verrouillage 50 vienne buter contre ladite face 104 afin d'être immédiatement arrêté dans sa course et de ne jamais atteindre la position verrouillée.

Bien entendu, la description du mode de réalisation préféré qui vient d'être faite est donnée uniquement à titre d'exemple non limitatif.

En conséquence, le profil de came 88 et la came 84 du premier dispositif 76 dépendent du type de dispositif de verrouillage 50 que comporte l'unité de moulage 24.

Ainsi, tel qu'indiqué précédemment, le dispositif de verrouillage 50 peut également ne pas comporter de mécanisme de blocage 90, comme il peut ne pas comporter de moyens 66 de rappel élastique.

De surcroît, la présence ou l'absence d'un mécanisme de blocage est indépendante de celle de moyens 66 de rappel élastique des moyens de verrouillage du dispositif de verrouillage.

Selon une variante non représentée, le dispositif de verrouillage 50 est dépourvu de moyens 66 de rappel élastique et le premier dispositif 76 est apte à actionner, par exemple par une came 84, l'organe de commande 52 pour commander les moyens de verrouillage 58, 60 entre les positions verrouillée et déverrouillée.

Dans une telle variante, le premier dispositif 76 est en conséquence apte à commander sélectivement les moyens de verrouillage 58, 60 du dispositif de verrouillage 50 vers l'un ou vers l'autre desdites positions verrouillée et déverrouillée.

Dans une telle variante, le premier dispositif 76 peut être dépourvu de mécanisme de blocage ou alors comporter un tel mécanisme de blocage pour immobiliser les moyens de verrouillage et cela dans l'une et/ou l'autre desdites positions verrouillée et déverrouillée.

Selon une autre variante non représentée, le premier dispositif 76 comporte ou est dépourvu de mécanisme de blocage et des moyens de rappel élastique sont intégrés de manière à rappeler automatiquement les moyens de verrouillage 58, 60 vers la position déverrouillée (et non vers la position verrouillée).

Une fois que les moyens de verrouillage 58, 60 occupent ladite position déverrouillée, il est alors possible de poursuivre l'ouverture de l'unité de moulage 24 de manière à pouvoir accéder au moule à changer.

Pour ce faire, le module 70 comporte le deuxième dispositif 78 destiné à actionner sélectivement le dispositif d'ouverture et de fermeture 46 de l'unité de moulage 24.

Avantageusement, le deuxième dispositif 78 est monté mobile entre :
- une position de repos occupée lorsque le module 70 est en état de vielle, et
- une position de travail occupée lorsque le module 70 est en état de service.

En position de travail illustrée par la figure 5, le deuxième dispositif 78 est apte à coopérer avec l'organe de commande 48 du dispositif d'ouverture/fermeture 46 sous l'action de moyens de déplacement relatif entre le module 70 et la machine 10.

Le deuxième dispositif 78 du module 70 comporte au moins un actionneur 106 commandant sélectivement le déplacement d'au moins une came 108 entre lesdites positions de repos et de travail.

Avantageusement, la came 108 coopère avec l'organe de commande 48 du dispositif d'ouverture/fermeture 46 de l'unité de moulage 24 pour provoquer le déplacement des porte-moules 26 entre lesdites positions ouverte et fermée.

De préférence, la came 108 est montée mobile en translation entre lesdites positions de repos et de travail.

En variante, la came 108 est montée mobile en rotation entre lesdites positions de repos et de travail.

Le deuxième dispositif 78 est porté par le châssis 80 qui comporte des moyens coulissants 110, tels qu'une ou deux glissières, afin que l'actionneur 106 commande en déplacement, ici en coulissement vertical, la position haute ou basse de ladite came 108.

Avantageusement, la came 108 de commande du dispositif d'ouverture et de fermeture 46 comporte un profil de came 112 qui présente au moins un tronçon TO de commande de l'ouverture et un tronçon TF de commande de la fermeture des porte-moules 26 de l'unité de moulage 24.

La came 108 comporte un chemin de came 112 qui est délimité par le profil 112A d'une première pièce 114 et par le profil 112B d'une deuxième pièce 116.

Avantageusement, les pièces 114 et 116 sont montées mobiles sur une platine 118 présentant en coupe longitudinale un profil en « U » formé d'un fond 120 et de deux ailes 122 et 124 respectivement avant et arrière.

Chaque pièce 114, 116 est ainsi montée pivotante autour d'un arbre 126 formant un axe de rotation et ceci à l'encontre d'organes élastiques, tels que des ressorts 128.

De préférence, la première pièce 114 est montée pivotante autour d'un arbre 126 agencé à l'une de ses extrémités transversales et à l'encontre d'un ressort 128 agencé à l'autre extrémité et interposé entre l'aile 124 verticale de la platine 118 et un bord de la pièce 114.

La deuxième pièce 116 est montée pivotante à l'encontre de deux ressorts 128 agencés entre l'aile 122 verticale de la platine 118 et un bord de la pièce 116.

Le débattement de chacune desdites pièces 114, 116 est avantageusement limité par des moyens de butée, réalisé par exemple par coopération entre un pion 130 solidaire du fond de la platine 118 qui est susceptible de débattre dans une lumière 132 complémentaire que comporte chaque pièce 114, 116.

Grâce à une telle conception de came 108, on limite en particulier les risques de coincement de l'organe de commande 48 parcourant le chemin de came 112.

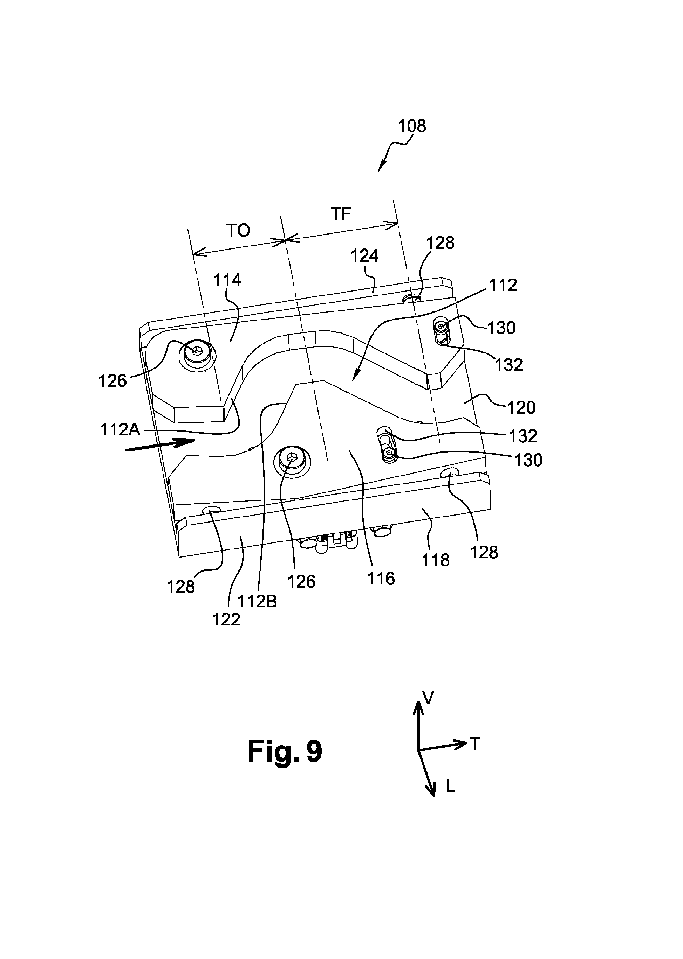

Le chemin de came 112 est parcouru par l'organe de commande 48 du dispositif d'ouverture/fermeture 46 selon la flèche indiquée sur la figure 9.

Avantageusement, l'entrée est chanfreinée pour faciliter l'insertion du galet inférieur de l'organe de commande 48 dans le chemin de came 112 qui comporte un premier tronçon suivi du tronçon TO correspondant à la commande de l'ouverture des porte-moules 26 de l'unité de moulage 24.

De plus, le chemin de came 112 comporte un tronçon TF correspondant à la commande de la fermeture qui survient après l'ouverture et le changement du moule de l'unité de moulage 24, lorsque le carrousel 22 de la machine 10 est entraîné en rotation pour évacuer l'unité de moulage 24 traitée et amener l'unité de moulage 24 suivante afin de procéder également au changement du moule.

La position déterminée, dite de changement de moule, correspond à la position médiane occupée par l'organe de commande 48 dans le chemin de came 112 lorsqu'il se trouve à la jonction des tronçons TO et TF.

Avantageusement, le chemin de came 112 est conçu de manière que, lorsque ladite position déterminée est atteinte, l'ouverture des porte-moules se fasse avec un angle au centre qui soit maximal afin de faciliter l'accès au moule.

Avantageusement, les actionneurs 82 et 106 du premier dispositif 76 et du deuxième dispositif 78 constituent des moyens de commande du changement d'état du module 70 entre les états de veille et d'utilisation.

Avantageusement, le module 70 est agencé dans une partie arrière de la machine 10, diamétralement opposée à ladite partie avant comportant les zones d'introduction et d'évacuation précitées, la partie arrière comportant par exemple une zone d'implantation Z3 hachurée sur la figure 1 dans laquelle le module 70 est susceptible d'être monté.

Avantageusement, il est prévu dans l'enceinte 30 des portes d'accès à ladite zone Z3 d'intervention comportant le module 70 selon l'invention.

Dans le cas d'une machine 10 de type rotative telle qu'illustrée sur la figure 1, le carrousel 22 est entraîné en rotation par des moyens d'entraînement à moteur (non représentés) qui sont commandés par une unité de contrôle.

En mode de fonctionnement de la machine, dit de production, mis en oeuvre pour la fabrication de récipients de la machine, la cadence de la machine est ainsi déterminée par la vitesse de rotation de la machine.

Dans une machine selon l'état de la technique, l'arrêt de la rotation du carrousel est obtenu soit par l'arrêt des moyens d'entraînement à moteur, le carrousel finissant ensuite par s'arrêter de lui-même après un laps de temps donné, soit par un arrêt des moyens d'entraînement à moteur et l'actionnement de moyens de freinage associés au carrousel de manière à pouvoir procéder à un arrêt rapide de la machine.

Dans l'état de la technique et pour procéder à un changement de moule, l'unité de moulage 24 était jusqu'alors amenée dans la zone d'intervention souhaitée par l'opérateur qui commandait la rotation du carrousel par à-coups successifs jusqu'à ce que l'unité de moulage désirée de la série soit positionnée approximativement dans ladite zone d'intervention.

Il est également proposé un procédé de commande de la rotation de la machine en mode de fonctionnement, dit d'intervention, destiné à la mise en oeuvre du changement de moule et associé à l'état de veille du module 70 de commande.

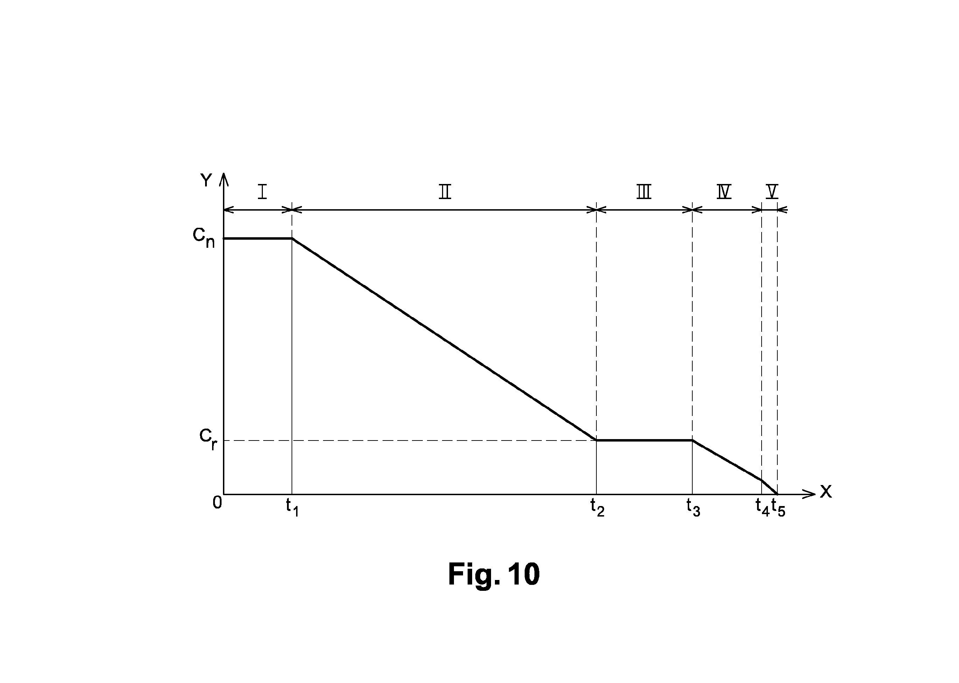

On a représenté sur la figure 10, un graphe illustrant l'évolution de la cadence en ordonnée (Y) en fonction du temps en abscisses (X) lorsque ledit procédé de commande est mis en oeuvre.

Avantageusement, le procédé de commande est décrit ci-après dans l'hypothèse où la machine 10 se trouve initialement en mode de fonctionnement, dit de production, pour la fabrication de récipients.

Partant de cet état, la machine 10 est alors entraînée en rotation à une cadence nominale Cn déterminée, par exemple une cadence de production de 40.000 récipients par heure.

La cadence nominale Cn correspond à la première portion "I" de la courbe s'étendant de zéro jusqu'au temps t₁ tel que cela est représenté sur la figure 10.

Avantageusement, la machine comporte un variateur qui est associé aux moyens d'entraînement à moteur et qui est piloté par l'unité de contrôle. Le variateur est notamment destiné à gérer les variations de cadences, grâce à quoi lesdites variations s'effectuent de préférence de manière linéaire dans le temps.

Le procédé de commande comporte des étapes successives dont une première étape (a) consiste à commander la décélération du carrousel de la machine 10 d'une cadence nominale Cn jusqu'à atteindre une cadence dite réduite Cr.

Pour ce faire, l'unité de contrôle commande les moyens d'entraînement du carrousel et le variateur afin de ralentir le carrousel qui au cours du laps de temps t₁ à t₂, décroît linéairement selon la rampe rectiligne illustrée sur la seconde portion "II" de la courbe.

Ainsi, selon la première étape (a), on procède au ralentissement en utilisant uniquement les moyens d'entraînement et le variateur associé, la rampe linéaire de décélération étant programmée dans l'unité de contrôle de la machine.

La cadence réduite Cr est par exemple une cadence d'environ 10.000 récipients par heure.

Dans une machine 10 pour la fabrication de récipients, les différentes unités de moulage 24 réparties circonférentiellement sont avantageusement toutes identifiées, par exemple par un numéro : 1, 2, 3 ... selon le nombre total d'unité de la série.

Une telle identification permet avantageusement d'établir une traçabilité lors du mode de fonctionnement, dit de production, de la machine.

Grâce à quoi, il est notamment possible de déterminer quelle est l'unité de moulage 24 en cause lorsque surviennent des problèmes, tels que des défauts de fabrication sur les récipients.

Ainsi, chacune des unités de moulage 24 de la série que comporte la machine 10 est identifiée de même qu'est identifié le moule qu'elle comporte.

La deuxième étape (b) du procédé de commande consiste à amener, à la cadence réduite Cr, la première unité de moulage 24 de la série vers la zone d'intervention.

La deuxième étape (b) correspond à la troisième portion "III" de la courbe de la figure 10 qui est comprise entre les temps t₂ et t₃.

Avantageusement, la cadence réduite Cr est choisie suffisamment élevée pour que la durée de la deuxième étape (b) soit optimisée, en particulier si ladite première unité de moulage 24 doit effectuer quasiment un tour complet de carrousel.

Lorsque la première unité de moulage 24 approche de ladite zone d'intervention dans laquelle est implantée le module 70 selon l'invention, une troisième étape (c) est alors mise en oeuvre.

La troisième étape (c) du procédé de commande consiste à commander de nouveau une décélération du carrousel de la machine 10 depuis la cadence dite réduite Cr jusqu'à une cadence de seuil déterminée.

Comme pour l'étape (a), la décélération est obtenue en agissant de préférence uniquement sur les moyens d'entraînement à moteur et le variateur de la machine 10.

La troisième étape (c) correspond à la quatrième portion "IV" de la courbe de la figure 1 mise en oeuvre entre les temps t₃ et t₄.

Avantageusement, la rampe linéaire de décélération qui est programmée dans l'unité de contrôle de la machine pour la deuxième décélération s'effectue avec un asservissement en position de la première unité de moulage 24.

Lors de la mise en oeuvre de la troisième étape (c), la première unité de moulage 24 qui se déplace en rotation autour du carrousel selon la flèche F se situe toujours en amont de ladite zone d'intervention et grâce à l'asservissement en position réalisé sa position relative sur le carrousel est connue à chaque instant t.

Ainsi, lorsque la première unité de moulage 24 est en approche de ladite zone, on procède à la mise en oeuvre d'une quatrième étape (d) selon le procédé de commande.

La quatrième étape (d) consiste à actionner les moyens de freinage de la machine 10 de manière à provoquer l'arrêt de la première unité dans une position finale déterminée qui est située en amont du module 70 de commande.

La quatrième étape (d) correspond à la cinquième portion "V" de la courbe, comprise entre les temps t₄ et t₅, au cours de laquelle les moyens de freinage réduisent la cadence de la cadence de seuil jusqu'à atteindre une cadence nulle correspondant à l'arrêt de la machine lorsque la première unité de moulage occupe ladite position finale déterminée.

Avantageusement, grâce à l'asservissement en position, il est possible de déterminer avec précision ladite position finale dans laquelle est arrêtée la première unité de moulage 24.

A cet égard, on rappellera que, pour une machine 10 rotative, la distance entre deux unités de moulage 24 consécutives est généralement appelée "pas" et que le pas P est fonction du nombre d'unités de moulage de la série qui réparties angulairement de manière régulière sur les 360° de la circonférence du carrousel.

De préférence, la position finale est déterminée de manière à être distante du module 70 de commande d'environ un demi pas de la machine 10.

Une cinquième étape (e) consiste à actionner le module 70 de commande afin de passer de l'état de veille occupé jusqu'alors à l'état d'utilisation.

L'état d'utilisation du module 70 de commande est associé au mode de fonctionnement, dit d'intervention, de la machine 10 et destiné à ce qu'il soit procédé au moins au changement du moule de la première unité de moulage.

L'obtention de l'état d'utilisation du module 70 résulte de ce que le premier dispositif 76 d'actionnement du dispositif de verrouillage 50 et le deuxième dispositif 78 d'actionnement du dispositif d'ouverture/fermeture de l'unité de moulage sont respectivement déplacés de leur position de repos correspondant à l'état de veille du module 70 jusqu'à leur position de travail correspondant à son état d'utilisation.

Plus précisément selon le mode de réalisation préféré décrit précédemment en référence aux figures 1 à 9, l'actionneur 82 du premier dispositif 76 du module 70 est commandé pour faire pivoter, autour de l'axe A, la came 84 depuis la position de repos illustrée à la figure 4 jusqu'à la position de travail illustrée à la figure 5.

En position de travail, la came 84 présentant le profil de came 88 est alors apte à coopérer avec l'organe de commande 52 du dispositif de verrouillage 50 sous l'action des moyens de déplacement relatif.

De la même manière, l'actionneur 106 du deuxième dispositif 78 du module 70 est commandé pour faire coulisser verticalement vers le haut la came 108, depuis sa position de repos illustrée à la figure 4 jusqu'à sa position de travail illustrée à la figure 5.

En position de travail, la came 108 est alors apte à coopérer avec l'organe de commande 48 du dispositif d'ouverture/fermeture 46 de l'unité de moulage sous l'action des moyens de déplacement relatif.

Dès lors que, suivant la cinquième étape (e), chacun des premier et deuxième dispositifs 76, 78 du module 70 de commande sont en position de travail, on procède alors à une sixième étape (f).

La sixième étape (f) consiste à commander les moyens d'entraînement à moteur pour entraîner en rotation selon la flèche F le carrousel de la machine 10 et cela de manière à déplacer la première unité de moulage 24 de la position finale déterminée jusqu'à une position déterminée, dite de changement de moule, qui est situé en aval du module 70 de commande.

Avantageusement, les moyens de déplacement relatif sont en effet constitués par l'unité de moulage 24 qui est apte à être déplacée par rapport au module 70 fixe suivant une course propre afin d'amener chacun des organes de commande 48 et 52 à coopérer avec les moyens d'actionnement 84, 108 des dispositifs 76, 78 associés occupant sa position de travail.

La première unité de moulage 24 effectue ainsi une première partie de course, correspondant ici de préférence à un demi pas, pour atteindre le module 70 de commande puis, depuis le module 70, poursuit et effectue une deuxième partie de course jusqu'à atteindre une position déterminée, dite de changement de moule.

De préférence, la deuxième partie de course de la première unité de moulage 24 est égale au pas P, c'est-à-dire à la distance entre deux unités de moulage 24 consécutives de la machine 10 de sorte que lorsque la première unité de moulage 24 a atteint la position de changement de moule, la deuxième unité de moulage lui succédant avec un écartement égal au pas P se trouve en coïncidence avec les dispositifs 76 et 78 du module 70 de commande.

Lorsque la première unité de moulage 24 atteint ladite position déterminée de changement de moule, l'entraînement en rotation du carrousel est arrêté, par exemple en actionnant les moyens de freinage, de manière à immobiliser ladite première unité de moulage 24 dans la position de changement de moule.

Une septième étape (g) du procéder de commande consiste donc à arrêter la première unité de moulage 24 dans ladite position de changement de moule.

Les opérations de démontage du moule de la première unité de moulage 24 et de montage d'un nouveau moule sont alors mises en oeuvre.

Une fois le changement de moule sur la première unité de moulage 24 achevé, on procède alors à la mise en oeuvre d'une huitième étape (h) similaire à la sixième étape (e) dont elle ne diffère que par la course parcourue.

La huitième étape (h) du procédé de commande consiste à commander en rotation le carrousel pour effectuer une course déterminée égale au pas P et à immobiliser le carrousel après ladite course.

Avantageusement, la course déterminée étant égale au pas P de la machine 10, la première unité de moulage 24 se décale d'un pas P vers l'aval depuis la position de changement de moule et la deuxième unité de moulage distante d'un pas P vient se positionner dans ladite position déterminée de changement de moule tandis que la troisième unité de moulage se positionne quant à elle en vis-à-vis du module 70 de commande.

La deuxième unité de moulage 24 est en conséquence immobilisée à son tour dans la position de changement de moule dans laquelle les porte-moules 26 sont en position ouverte afin de permettre l'accès au moule à changer.

On procède ainsi successivement au changement de moule de l'ensemble des unités de moulage 24 de la machine 10.

En variante, la course effectuée est différente de la valeur du pas P, par exemple lorsque l'on souhaite procéder uniquement au changement du moule d'une unité de moulage sur deux.

Selon une variante de réalisation non représentée, les moyens de déplacement relatif sont constitués par le module 70 qui est monté mobile par rapport à l'unité de moulage 24 occupant une position déterminée fixe.

Avantageusement, le module 70 est alors apte à être déplacé par des moyens d'entraînement depuis :
- une position escamotée correspondant à la position repos des premier et deuxième dispositifs 76, 78 jusqu'à
- une position avancée correspondant à position de travail des premier et deuxième dispositifs 76, 78.

Grâce à quoi, on amène les premier et deuxième dispositifs 76, 78 à coopérer avec les organes de commande 48 et 52 respectifs du dispositif de verrouillage 50 et du dispositif d'ouverture/fermeture 46 et cela jusqu'à atteindre une position déterminée, dite de changement de moule.

Avantageusement, les moyens d'entraînement du module 70 entre lesdites positions escamotée et avancée constituent alors des moyens de commande du changement d'état du module 70 entre les états de veille et d'utilisation.

De préférence, le module 70 est réalisé sous la forme d'un chariot motorisé qui est apte à être piloté en déplacement entre lesdites positions escamotée et avancée.

## Revendications

1. Machine (10) pour la fabrication de récipients, notamment de bouteilles, en matière thermoplastique comportant au moins une unité de moulage (24) qui comporte au moins deux porte-moules (26) montés mobiles entre une position ouverte et une position fermée et un moule comportant au moins deux éléments de moulage (72) fixés chacun de manière démontable à un porte-moule (26) associé par des moyens de fixation, ladite unité de moulage (24) comportant :
- un dispositif d'ouverture/fermeture (46) de l'unité de moulage (24) comportant un organe de commande (48) pour déplacer les porte-moules (26) entre lesdites positions ouverte et fermée ;
- un dispositif de verrouillage (50) de l'unité de moulage (24) comportant un organe de commande (52) des moyens de verrouillage (58, 60) qui sont montés mobiles entre :
• une position verrouillée dans laquelle les porte-moules (26) de l'unité de moulage (24) sont maintenus en position fermée par lesdits moyens de verrouillage (58, 60), et
• une position déverrouillée dans laquelle les porte-moules (26) sont libres d'être écartés de la position fermée vers la position ouverte
**caractérisée en ce que** la machine (10) comporte un module (70) de commande susceptible d'occuper au moins :
- un état de veille associé à un mode de fonctionnement de la machine (10), dit de production, pour la fabrication de récipients par la machine, et
- un état d'utilisation associé à un autre mode de fonctionnement de la machine (10), dit d'intervention, pour procéder au moins au changement du moule de l'unité de moulage (24),
et apte à commander sélectivement le dispositif de verrouillage (50) et le dispositif d'ouverture/fermeture (46) de l'unité de moulage (24) en fonction de l'état occupé par le module (70), ledit module (70) comportant au moins :
- un premier dispositif (76) destiné à actionner sélectivement le dispositif de verrouillage (50) de l'unité de moulage (24) et monté mobile entre :
• une position de repos occupée lorsque le module (70) est en état de veille, et
• une position de travail occupée lorsque le module (70) est en état d'utilisation et dans laquelle le premier dispositif (76) est apte à coopérer avec l'organe de commande (52) du dispositif de verrouillage (50) sous l'action de moyens de déplacement relatif entre le module (70) et la machine (10),
- un deuxième dispositif (78) destiné à actionner sélectivement l'organe de commande (48) du dispositif d'ouverture/fermeture (46) de l'unité de moulage (24) et qui est monté mobile entre :
• une position de repos occupée lorsque le module (70) est en état de vielle, et
• une position de travail occupée lorsque le module (70) est en état de service et dans laquelle le deuxième dispositif (78) est apte à coopérer avec l'organe de commande (48) du dispositif d'ouverture/fermeture (46) sous l'action de moyens de déplacement relatif entre le module (70) et la machine (10),
- et un châssis (80) qui supporte lesdits premier et deuxième dispositifs (76, 78) du module (70).

2. Machine selon la revendication 1, **caractérisée en ce que** les moyens de déplacement relatif sont constitués par l'unité de moulage (24) qui est apte à être déplacée par rapport au module (70) fixe suivant une course propre à amener chaque organe de commande (48, 52) à coopérer avec le dispositif (76, 78) associé occupant sa position de travail et ceci jusqu'à atteindre une position déterminée, dite de changement de moule.

3. Machine selon la revendication 2, **caractérisée en ce que** le premier dispositif (76) du module (70) comporte au moins un actionneur (82) commandant sélectivement le déplacement d'au moins une came (84) entre lesdites positions de repos et de travail, ladite came (84) coopérant avec l'organe de commande (52) du dispositif de verrouillage (50) pour provoquer le déplacement des moyens de verrouillage (58, 60) entre lesdites positions verrouillée et déverrouillée.

4. Machine selon la revendication 3, **caractérisée en ce que** la came (84) de commande du dispositif de verrouillage (50) comporte un profil de came (88) présentant au moins un tronçon de déverrouillage (T2) pour provoquer le déplacement des moyens de verrouillage (58, 60) vers la position déverrouillée.

5. Machine selon la revendication 3, **caractérisée en ce que** le dispositif de verrouillage (50) comporte des moyens (66) de rappel élastique aptes à rappeler automatiquement les moyens de verrouillage (58, 60) vers la position verrouillée.

6. Machine selon l'une des revendications 4 ou 5, **caractérisée en ce que** l'unité de moulage (24) comporte un mécanisme (90) de blocage associé au dispositif de verrouillage (50), ledit mécanisme (90) comportant des moyens de blocage (92) aptes à être commandés sélectivement entre une position inactive et une position active de blocage dans laquelle lesdits moyens de blocage (92) immobilisent les moyens de verrouillage (58, 60) en position déverrouillée.

7. Machine selon la revendication 6, **caractérisée en ce que** le mécanisme (90) de blocage comporte un organe (98) de rappel élastique des moyens de blocage (92) vers la position active et **en ce que** les moyens de blocage (92) sont déplacés, à l'encontre dudit organe (98) de rappel élastique, de la position active vers la position inactive par un élément de commande (54) qui, lié à l'un des porte-moules (26), est apte à coopérer avec les moyens de blocage (92) de manière à provoquer automatiquement le déblocage lors de la fermeture des porte-moules (26) de l'unité de moulage (24).

8. Machine selon l'une quelconque des revendications précédentes, **caractérisée en ce que** le deuxième dispositif (78) du module (70) comporte au moins un actionneur (106) commandant sélectivement le déplacement d'au moins une came (108) entre lesdites positions de repos et de travail, ladite came (108) coopérant avec l'organe de commande (48) du dispositif d'ouverture/fermeture (46) de l'unité pour provoquer le déplacement des porte-moules (26) entre lesdites positions ouverte et fermée.

9. Machine selon la revendication 8 prise en combinaison avec la revendication 3, **caractérisé en ce que** les actionneurs (82, 106) du premier dispositif (76) et du deuxième dispositif (78) constituent des moyens de commande du changement d'état du module (70) entre les états de veille et d'utilisation.

10. Machine selon l'une quelconque des revendications précédentes, ladite machine (10) de type rotative comportant un carrousel (22) pourvu circonférentiellement d'une série d'unités de moulage (24) réparties angulairement de manière régulière, chacune des unités parcourant un trajet globalement circulaire depuis une zone d'introduction (Z1) des préformes (14) jusqu'à une zone d'évacuation (Z2) des récipients (14') respectivement situées dans une partie avant de la machine (10),
**caractérisée en ce que** le module (70) est agencé dans une partie arrière (Z3) de la machine (10) qui est diamétralement opposée à ladite partie avant.

## Patentansprüche

1. Maschine (10) für die Herstellung von Behältern, insbesondere von Flaschen, aus thermoplastischem Material, die wenigstens eine Gießeinheit (24) umfasst, die wenigstens zwei Formträger (26) umfasst, die zwischen einer geöffneten Position und einer geschlossenen Position beweglich angebracht sind, und eine Form besitzt, die wenigstens zwei Gießelemente (72) enthält, die jeweils abnehmbar an einem Formträger (26), der durch Befestigungsmittel verbunden ist, befestigt sind, wobei die Gießeinheit (24) Folgendes umfasst:
- eine Vorrichtung (46) zum Öffnen/Schließen der Gießeinheit (24), die ein Steuerorgan (48) aufweist, um die Formträger (26) zwischen der geöffneten und der geschlossenen Position zu verlagern;
- eine Vorrichtung (50) zum Verriegeln der Gießeinheit (24), die ein Organ (52) aufweist, um Verriegelungsmittel (58, 60) zu steuern, die beweglich montiert sind zwischen:
• einer verriegelten Position, in der die Formträger (26) der Gießeinheit (24) durch die Verriegelungsmittel (58, 60) in der geschlossenen Position gehalten werden, und
• einer entriegelten Position, in der die Formträger (26) aus der geschlossenen Position in die geöffnete Position entfernt werden können,
**dadurch gekennzeichnet, dass** die Maschine (10) ein Steuermodul (70) umfasst, das wenigstens annehmen kann:
- einen Wachzustand, der einer sogenannten Produktionsbetriebsart der Maschine (10) zugeordnet ist, in der durch die Maschine Behälter hergestellt werden, und
- einen Verwendungszustand, der einer anderen sogenannten Eingreifbetriebsart der Maschine (10) zugeordnet ist, um wenigstens einen Wechsel der Form der Gießeinheit (24) vorzunehmen, und in dem die Vorrichtung (50) zum Verriegeln und die Vorrichtung (46) zum Öffnen/Schließen der Gießeinheit (24) als Funktion des von dem Modul (70) eingenommenen Zustands wahlweise gesteuert werden können, wobei das Modul (70) wenigstens umfasst:
- eine erste Vorrichtung (76), die dazu bestimmt ist, wahlweise die Vorrichtung (50) zum Verriegeln der Gießeinheit (24) zu betätigen, und beweglich montiert ist zwischen:
• einer Ruheposition, die eingenommen wird, wenn das Modul (70) im Wachzustand ist, und
• einer Arbeitsposition, die eingenommen wird, wenn das Modul (70) im Verwendungszustand ist und in der die erste Vorrichtung (76) mit dem Organ (52) zum Steuern der Verriegelungsvorrichtung (50) unter der Wirkung von Mitteln zu relativen Verlagern zwischen dem Modul (70) und der Maschine (10) zusammenwirken kann,
- eine zweite Vorrichtung (78), die dazu bestimmt ist, wahlweise das Organ (48) zum Steuern der Vorrichtung (46) zum Öffnen/Schließen der Gießeinheit (24) zu betätigen, und die beweglich montiert ist zwischen:
• einer Ruheposition, die eingenommen wird, wenn das Modul (70) im Wachzustand ist, und
• einer Arbeitsposition, die eingenommen wird, wenn das Modul (70) im Dienstzustand ist, und in der die zweite Vorrichtung (78) mit dem Organ (48) zum Steuern der Vorrichtung (46) zum Öffnen/Schließen unter der Wirkung von Mitteln zum relativen Verlagern zwischen dem Modul (70) und der Maschine (10) zusammenwirken kann,
- und einen Rahmen (80), der die erste und die zweite Vorrichtung (76, 78) des Moduls (70) trägt.

2. Maschine nach Anspruch 1, **dadurch gekennzeichnet, dass** die Mittel zum relativen Verlagern durch die Gießeinheit (24) gebildet sind, die in Bezug auf das feste Modul (70) längs einer Bahn verlagert werden kann, die geeignet ist, jedes Steuerorgan (48, 52) dazu zu bringen, mit der zugeordneten Vorrichtung (76, 78) zusammenzuwirken, die ihre Arbeitsposition einnimmt, und dies, bis eine bestimmte sogenannte Formwechselposition erreicht ist.

3. Maschine nach Anspruch 2, **dadurch gekennzeichnet, dass** die erste Vorrichtung (76) des Moduls (70) wenigstens einen Aktor (82) umfasst, der wahlweise die Verlagerung wenigstens eines Nockens (84) zwischen der Ruheposition und der Arbeitsposition steuert, wobei der Nocken (84) mit dem Organ (52) zum Steuern der Verriegelungsvorrichtung (50) zusammenwirkt, um die Verlagerung der Verriegelungsmittel (58, 60) zwischen der verriegelten Position und der entriegelten Position hervorzurufen.

4. Maschine nach Anspruch 3, **dadurch gekennzeichnet, dass** der Nocken (84) zum Steuern der Verriegelungsvorrichtung (50) ein Nockenprofil (88) umfasst, das wenigstens ein Entriegelungsteilstück (T2) aufweist, um die Verlagerung der Verriegelungsmittel (58, 60) in die entriegelte Position hervorzurufen.

5. Maschine nach Anspruch 3, **dadurch gekennzeichnet, dass** die Verriegelungsvorrichtung (50) Mittel (66) zum elastischen Rückstellen umfasst, die die Verriegelungsmittel (58, 60) automatisch in die verriegelte Position zurückstellen können.

6. Maschine nach einem der Ansprüche 4 oder 5, **dadurch gekennzeichnet, dass** die Gießeinheit (24) einen Blockiermechanismus (90) umfasst, der der Verriegelungsvorrichtung (50) zugeordnet ist, wobei der Mechanismus (90) Blockiermittel (92) aufweist, die wahlweise zwischen einer inaktiven Position und einer aktiven Position des Blockierens gesteuert werden können, wobei in der aktiven Position die Blockiermittel (92) die Verriegelungsmittel (58, 60) in der entriegelten Position unbeweglich machen.

7. Maschine nach Anspruch 6, **dadurch gekennzeichnet, dass** der Blockiermechanismus (90) ein Organ (98) zum elastischen Zurückstellen der Blockiermittel (92) in die aktive Position umfasst und dass die Blockiermittel (92) entgegen dem elastischen Rückstellorgan (98) aus der aktiven Position in die inaktive Position durch ein Steuerelement (54) verlagert werden, das in Verbindung mit einem der Formträger (26) mit den Blockiermitteln (92) in der Weise zusammenwirken kann, dass die Entblockierung beim Schließen der Formträger (26) der Gießeinheit (24) automatisch hervorgerufen wird.

8. Maschine nach einem der vorhergehenden Ansprüche, **dadurch gekennzeichnet, dass** die zweite Vorrichtung (78) des Moduls (70) wenigstens einen Aktor (106) umfasst, der wahlweise die Verlagerung wenigstens eines Nockens (108) zwischen der Ruheposition und der Arbeitsposition steuert, wobei der Nocken (108) mit dem Steuerorgan (48) der Vorrichtung (46) zum Öffnen/Schließen der Einheit zusammenwirkt, um die Verlagerung der Formträger (26) zwischen der geöffneten und der geschlossenen Position hervorzurufen.

9. Maschine nach Anspruch 8 in Kombination mit Anspruch 3, **dadurch gekennzeichnet, dass** die Aktoren (82, 106) der ersten Vorrichtung (76) und der zweiten Vorrichtung (78) Mittel zum Steuern des Zustandswechsel des Moduls (70) zwischen dem Ruhezustand und dem Verwendungszustand bilden.

10. Maschine nach einem der vorhergehenden Ansprüche, wobei die Maschine (10) vom rotierenden Typ ist und ein Karussell (22) aufweist, das in Umfangsrichtung mit einer Reihe von Gießeinheiten (24) versehen ist, die in Winkelrichtung regelmäßig verteilt sind, wobei jede der Einheiten eine im Allgemeinen kreisförmige Bahn von einer Einleitungszone (Z1) von Vorformlingen (14) bis zu einer Ausbringzone (Z2) der Behälter (14'), die sich jeweils in einem vorderen Teil der Maschine (10) befinden, durchläuft,
**dadurch gekennzeichnet, dass** das Modul (70) in einem hinteren Teil (Z3) der Maschine (10) angeordnet ist, der zu dem vorderen Teil diametral entgegengesetzt ist.

## Claims

1. Machine (10) for the manufacture of containers, notably bottles, made of thermoplastic, comprising at least one moulding unit (24) which comprises at least two mould holders (26) mounted such that they can move between an open position and a closed position, and a mould comprising at least two moulding elements (72) each fixed removably to an associated mould holder (26) by fixing means, the said moulding unit (24) comprising:
- a moulding unit (24) opening/closing device (46) comprising a control member (48) for moving the mould holders (26) between the said open and closed positions;
- a moulding unit (24) locking device (50) comprising a control member (52) for controlling the locking means (58, 60) which are able to move between:
• a locked position in which the mould holders (26) of the moulding unit (24) are kept in a closed position by the said locking means (58, 60), and
• an unlocked position in which the mould holders (26) are free to be parted from the closed position to the open position
**characterized in that** the machine (10) comprises a control module (70) able to occupy at least:
- a standby state associated with one mode of operation of the machine (10), known as the production mode, in which the machine manufactures containers, and
- a state of use associated with another mode of operation of the machine (10), known as the intervention mode, in which at least the mould of the moulding unit (24) can be changed,
and able selectively to control the moulding unit (24) locking device (50) and opening/closing device (46) according to the state occupied by the module (70), the said module (70) comprising at least:
- a first device (76) intended selectively to actuate the moulding unit (24) locking device (50) and mounted able to move between:
• a rest position occupied when the module (70) is in the standby state, and
• a work position occupied when the module (70) is in the state of use and in which the first device (76) is able to collaborate with the locking device (50) control member (52) under the action of means causing relative movement between the module (70) and the machine (10),
- a second device (78) intended selectively to actuate the moulding unit (24) opening/closing device (46) control member (48) and which is mounted such that it can move between:
• a rest position occupied when the module (70) is in the standby state, and
• a work position occupied when the module (70) is in the service state and in which the second device (78) is able to collaborate with the opening/closing device (46) control member (48) under the action of means causing relative movement between the module (70) and the machine (10),
- and a chassis (80) supporting said first and second devices (76, 78) of the module (70).

2. Machine according to Claim 1, **characterized in that** the means of relative movement consist of the moulding unit (24) which can be moved with respect to the fixed module (70) along a travel capable of bringing each control member (48, 52) into collaboration with the associated device (76, 78) occupying its work position until a set position, known as the mould change position, is reached.

3. Machine according to Claim 2, **characterized in that** the first device (76) of the module (70) comprises at least one actuator (82) selectively controlling the movement of at least one cam (84) between the said rest and work positions, the said cam (84) collaborating with the locking device (50) control member (52) to cause the locking means (58, 60) to move between the said locked and unlocked positions.

4. Machine according to Claim 3, **characterized in that** the locking device (50) control cam (84) comprises a cam profile (88) that has at least one unlocking section (T2) to cause the locking means (58, 60) to move into the unlocked position.

5. Machine according to Claim 3, **characterized in that** the locking device (50) comprises elastic return means (66) able automatically to return the locking means (58, 60) to the locked position.

6. Machine according to one of Claims 4 and 5, **characterized in that** the moulding unit (24) comprises a blocking mechanism (90) associated with the locking device (50), the said mechanism (90) comprising blocking means (92) able selectively to be made to move between an inactive position and an active blocking position in which the said blocking means (92) immobilize the locking means (58, 60) in the unlocked position.

7. Machine according to Claim 6, **characterized in that** the blocking mechanism (90) comprises an elastic return member (98) for elastically returning the blocking means (92) to the active position, and **in that** the blocking means (92) are moved, against the action of the said elastic return member (98), from the active position to the inactive position by a control element (54) which, connected with one of the mould holders (26), is able to collaborate with the blocking means (92) in such a way as automatically to cause unblocking upon closure of the mould holders (26) of the moulding unit (24).

8. Machine according to any one of the preceding claims, **characterized in that** the second device (78) of the module (70) comprises at least one actuator (106) selectively controlling the movement of at least one cam (108) between the said rest and work positions, the said cam (108) collaborating with the unit opening/closing device (46) control member (48) to cause the mould holders (26) to move between the said open and closed positions.

9. Machine according to Claim 8 considered in combination with Claim 3, **characterized in that** the actuators (82, 106) of the first device (76) and of the second device (78) constitute means for controlling the change of state of the module (70) between the standby and use states.

10. Machine according to any one of the preceding claims, the said machine (10) of rotary type comprising a carousel (22) circumferentially provided with a series of uniformly angularly distributed moulding units (24), each of the units travelling a circular overall path from a preform (14) introduction zone (Z1 ) to a container (14') discharge zone (Z2), the zones being situated respectively in a front part of the machine (10),
**characterized in that** the module (70) is arranged in a rear part (Z3) of the machine (10) which is diametrically opposite the said front part.
